# FASCICULE DE BREVET EUROPEEN

(11) **EP 1 094 631 B1**
(45) Date de publication et mention de la délivrance du brevet: **27.09.2006**
(21) Numéro de dépôt: 00203512.9
(22) Date de dépôt: 11.10.2000
(51) Int. Cl.: H04L 7/02, H04L 12/56, H04B 7/204, H04B 7/185, H04L 7/033

(54) **Recherche de l'instant d'échantillonnage optimal dans un système de transmissions par paquets TDMA**
Suche des optimalen Abtastzeitpunktes in einem TDMA Paketübertragungssystem
Quest for the optimum sampling point in a TDMA packet transmission system

(30) Priorité: 20.10.1999 FR 9913088
(43) Date de publication de la demande: 25.04.2001
(73) Titulaire: Koninklijke Philips Electronics N.V., 5621 BA Eindhoven (NL)
(72) Inventeur: Legrand, Delphine, 75008 Paris (FR); Brajal, Américo, 75008 Paris (FR); Chouly, Antoine, 75008 Paris (FR)
(74) Mandataire: van Oudheusden-Perset, Laure E.

(56) Documents cités:
- EP-A- 0 942 553
- WO-A-91/07831
- WO-A-93/01667

## Description

L'invention concerne un dispositif de recherche de l'instant d'échantillonnage optimal destiné à retrouver un échantillon, dit échantillon optimal, parmi des échantillons d'entrée et comportant un organe de calcul d'amplitude pour calculer les amplitudes moyennes des échantillons d'entrée.

Elle concerne également un récepteur pour système de transmission par paquets destiné à recevoir des paquets de données représentant des symboles émis par un terminal ou une station de tête, le récepteur comportant un dispositif de sur-échantillonnage pour générer une pluralité d'échantillons d'entrée à partir des données reçues.

L'invention concerne aussi un système de transmission par paquets comprenant au moins un terminal et une station de tête.

Elle concerne enfin un procédé de récupération de l'instant d'échantillonnage optimal destiné à retrouver un échantillon, dit échantillon optimal, parmi des échantillons d'entrée, comportant une étape de calcul d'amplitude pour déterminer le maximum des amplitudes moyennes de ces échantillons et pour en déduire l'échantillon optimal.

L'invention a d'importantes applications dans le domaine des transmissions par satellite ou par câble et notamment dans les transmissions avec voies de retour, dans lesquelles une pluralité de terminaux sont susceptibles de transmettre des paquets de données vers une station de tête selon un mécanisme de répartition des ressources en temps.

L'ouvrage intitulé « Digital Communication Receivers Synchronisation Channel Estimation and Signal Processing » de H. Meyr, M. Moeneclay et S. Fechtel publié aux éditions Wiley Series in Telecommunications and Signal Processing décrit aux pages 283 à 289 une technique de calcul de l'instant d'échantillonnage optimal. Dans la plupart des systèmes de transmission à répartition temporelle, il est nécessaire d'effectuer un sur-échantillonnage à la réception pour retrouver l'instant d'échantillonnage utilisé à l'émission. La technique décrite dans l'ouvrage cité préconise de calculer les énergies moyennes de chaque échantillon pour sélectionner l'échantillon optimal ayant l'énergie moyenne maximum. Cette technique est coûteuse en nombre de calculs puisqu'elle nécessite de calculer l'énergie moyenne de tous les échantillons avant de décider lequel est l'échantillon optimal.

Le document brevet WO 92/01667 décrit un procédé consistant à effectuer des analyses périodiques sur un signal échantillonné reçu afin de déterminer laquelle de ses parties ayant fait l'objet d'une mesure est apte à fournir des informations de synchronisation (horloge). Plus précisément, il est proposé de déterminer dans chaque partie analysée du signal le point d'échantillonnage qui présente l'amplitude maximale (pic de signal) dans une période symbole donnée, puis de calculer un gradient pour une portion choisie de chaque pic de chaque partie, de manière à attribuer un score à chaque pic, puis de comparer chaque score (associé à un pic) à un score minimal (seuil) de manière à déterminer le pic qui présente le score le plus grand par rapport au score minimal (seuil), et enfin d'alimenter une PLL (« Phase Lock Loop ») avec le point (ou instant) d'échantillonnage qui correspond au pic ainsi déterminé (qui présente le score le plus grand), et qui est considéré comme étant l'instant d'échantillonnage optimal du signal reçu.

L'invention a notamment pour but de permettre de récupérer très rapidement l'instant d'échantillonnage optimal en limitant considérablement le nombre de calculs et donc le coût de traitement.

Elle propose à cet effet, un dispositif de recherche d'instant d'échantillonnage optimal d'un signal échantillonné, destiné à retrouver un échantillon, dit échantillon optimal, parmi un nombre d'échantillons d'entrée égal à un multiple entier L d'un entier N, avec N=2ⁿ, N étant un entier, et comportant un organe de calcul d'amplitude pour calculer les amplitudes moyennes d'échantillons d'entrée. Ce dispositif se caractérise par le fait qu'il comprend en outre :
- un dispositif de prélèvement chargé de prélever un nombre d'échantillons d'entrée prédéterminé, parmi les N échantillons d'entrée, égal à un entier L×M, avec M=2^{m}, m étant un entier et 2<M<N, pour les fournir à l'organe de calcul en vue de déterminer celui qui a l'amplitude moyenne maximum, dit maximum approché,
- un sélectionneur chargé de sélectionner un échantillon d'entrée supplémentaire compris entre le maximum approché et l'échantillon voisin dont l'amplitude moyenne précédemment calculée est la plus grande et de le fournir à l'organe de calcul en vue de calculer son amplitude moyenne et
- un comparateur chargé de comparer l'amplitude moyenne de l'échantillon sélectionné au maximum approché précédent et d'en déduire un nouveau maximum approché,
et par le fait que l'échantillon optimal est obtenu au bout d'un nombre de calculs d'amplitude moyenne égal à M+n-m.

En utilisant des puissances de 2, à la fois pour le nombre d'échantillons d'entrée et pour le nombre d'échantillons prédéterminés, le nombre de calculs nécessaires pour aboutir à l'échantillon recherché est ainsi très faible et prédéfini selon une relation simple, il est proportionnel au logarithme en base 2 du facteur d'échantillonnage N.

Dans un mode de réalisation avantageux, l'échantillon d'entrée supplémentaire est situé au milieu entre le dernier maximum approché et l'échantillon voisin dont l'amplitude moyenne précédemment calculée est la plus grande.

Par ailleurs, les échantillons d'entrée représentent de préférence un symbole émis ayant une durée symbole. Dans ce cas, les échantillons prélevés, en nombre prédéterminé, sont préférentiellement répartis dans un intervalle de temps correspondant à la durée symbole.

L'invention propose également un récepteur, pour un système de transmission par paquets, destiné à recevoir des paquets de données représentant des symboles émis par un terminal ou une station de tête de ce système, et comportant un dispositif de sur-échantillonnage pour générer une pluralité d'échantillons d'entrée à partir des données reçues et un dispositif de recherche d'instant d'échantillonnage optimal du type de celui présenté ci-avant.

L'invention propose également un système de transmission par paquets comprenant au moins un terminal et/ou une station de tête comportant un récepteur du type de celui présenté ci-avant.

L'invention propose également un procédé de récupération d'instant d'échantillonnage optimal d'un signal échantillonné, destiné à retrouver un échantillon, dit échantillon optimal, parmi un nombre d'échantillons d'entrée égal à un multiple entier L d'un entier N, avec N=2ⁿ, N étant un entier, ledit procédé comportant une étape de calcul d'amplitude pour déterminer le maximum des amplitudes moyennes d'échantillons d'entrée et pour en déduire un échantillon optimal. Ce procédé se caractérise par le fait qu'il comporte en outre les étapes suivantes :
- prélever un nombre d'échantillons d'entrée prédéterminé, parmi les N échantillons d'entrée, égal à un entier L×M, avec M=2^{m}, m étant un entier et 2<M<N,
- déterminer les amplitudes moyennes des échantillons prélevés de manière à déduire une approximation de l'échantillon optimal ayant l'amplitude moyenne maximum, dite maximum approché,
- itérer la détermination d'amplitudes moyennes pour des échantillons d'entrée compris entre l'approximation de l'échantillon optimal et l'échantillon voisin dont l'amplitude moyenne précédemment calculée est la plus grande et,
- comparer le résultat de chaque itération au maximum approché précédemment calculé, correspondant à l'approximation précédente, pour en déduire une nouvelle approximation de l'échantillon optimal,
l'échantillon optimal étant obtenu au bout d'un nombre de calculs d'amplitude moyenne égal à M+n-m.

L'invention présente l'avantage de permettre de récupérer très rapidement l'instant d'échantillonnage optimal et permet d'effectuer cette opération pour chaque nouveau paquet reçu en provenance de l'un quelconque des terminaux du système.

L'invention sera mieux comprise et d'autres détails apparaîtront dans la description qui va suivre en regard des dessins annexés qui sont donnés à titre d'exemples non limitatifs et dans lesquels:
- la figure 1 représente un exemple de système de transmission selon l'invention,
- la figure 2 représente un schéma général d'un exemple de récepteur comportant un dispositif de recherche de l'instant d'échantillonnage optimal selon l'invention,
- la figure 3 représente un mode de réalisation du récepteur de la figure 2
- la figure 4 représente un exemple de procédé selon l'invention.

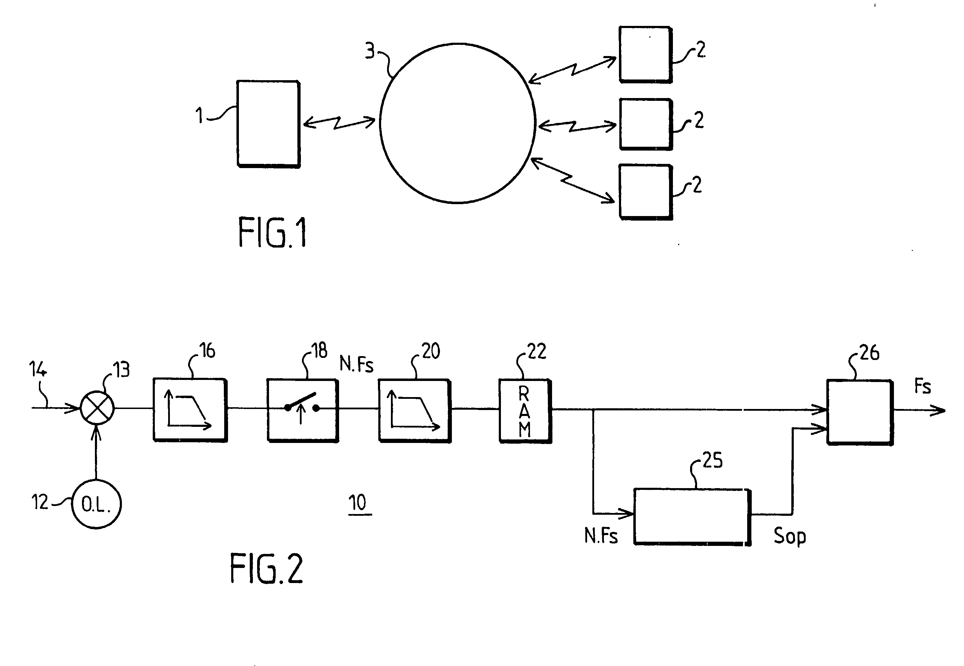

Un système de transmission selon l'invention est représenté à titre d'exemple sur la figure 1. Il comporte une station de tête 1 et une pluralité de terminaux interactifs 2 susceptibles d'émettre et de recevoir des données vers et en provenance de la station de tête en utilisant un média de transmission 3. Les transmissions des terminaux vers la station de tête sont qualifiées de transmissions montantes. Les transmissions de la station de tête vers les terminaux sont qualifiées de transmissions descendantes. Dans les transmissions montantes, la station de tête 1 a la fonction d'un récepteur. Dans les transmissions descendantes les terminaux sont des récepteurs. L'accès des terminaux au média de transmission se fait par exemple en utilisant un mécanisme d'accès multiple à répartition en fréquence (Frequency Division Multiple Access en anglais) combiné avec une répartition temporelle (Time Division Multiple Access en anglais). Le média de transmission peut être de différentes natures. Par exemple, il peut s'agir d'une transmission par câble, par voie hertzienne, ou par satellite, etc.

Dans un système de transmission par paquets à répartition temporelle, des terminaux différents peuvent émettre des données dans des intervalles de temps consécutifs avec des instants d'échantillonnage différents du fait que leurs horloges d'émission ne sont pas synchrones. De plus, ces horloges sont susceptibles de présenter une certaine gigue. Deux paquets émis par un même émetteur n'ont donc pas forcément te même instant d'échantillonnage. Par ailleurs, des distorsions dans le canal peuvent provoquer un décalage à l'arrivée. La station de tête ou le récepteur (qui peut être un autre terminal dans le cas d'un système point à point) doit donc effectuer un sur-échantillonnage, c'est-à-dire utiliser une horloge multiple de la fréquence d'échantillonnage théorique, pour retrouver l'instant d'échantillonnage utilisé à l'émission. Par exemple, la fréquence de sur-échantillonnage peut être 16 fois supérieure à la fréquence symbole, ce qui revient à extraire 16 échantillons à partir du signal reçu correspondant à un symbole émis. L'instant d'échantillonnage optimal peut varier d'un paquet à l'autre c'est pourquoi la station de tête dispose de peu de temps pour retrouver l'instant d'échantillonnage optimal, c'est-à-dire l'échantillon correspondant au symbole émis par la source, ici les différents terminaux. L'invention apporte notamment l'avantage de permettre de retrouver l'instant d'échantillonnage optimal plus vite que la plupart des méthodes classiques tout en diminuant notablement le nombre de traitements effectués. Les méthodes classiques consistent à calculer l'énergie moyenne des 16 échantillons selon un calcul qui varie en fonction de la méthode employée et à sélectionner parmi les 16 échantillons, l'échantillon qui a l'amplitude maximum.

Sur la figure 2 est représenté un schéma général d'un récepteur 10 selon l'invention. Il comporte un oscillateur local 12 et un mélangeur 13 pour transposer le signal reçu 14 de telle sorte que le spectre du signal transposé soit centré sur zéro plus ou moins une erreur en fréquence Δf du fait que les oscillateurs locaux utilisés pour émettre sur les fréquences porteuses ne sont pas parfaits. Le signal transposé est filtré par un filtre de réjection 16 pour éliminer les fréquences images autour de 2Fp où Fp est la fréquence d'émission, c'est-à-dire la fréquence porteuse théorique du signal reçu, ainsi que les autres porteuses qui sont utilisées dans le système. Le signal obtenu en sortie du filtre 16 est échantillonné par un dispositif de sur-échantillonnage 18 de facteur N qui prélève N échantillons, notés S₀ à S₁₅ pour chaque symbole du signal transposé. Les échantillons prélevés sont ensuite filtrés par un filtre 20, dit filtre optimal, adapté au filtre utilisé pour l'émission. Il s'agit d'un passe-bas de type racine de Nyquist centré autour de zéro. Le signal filtré est ensuite stocké dans une mémoire 22. Un dispositif de recherche de l'instant d'échantillonnage optimal 25 est prévu pour rechercher l'échantillon optimal c'est-à-dire l'échantillon correspondant au symbole émis pour permettre à un dispositif de sous-échantillonnage 26 de sélectionner l'échantillon optimal Sₒₚ sur les échantillons stockés dans la mémoire 22. Le nombre d'échantillons stockés, disponibles en entrée du dispositif de recherche de l'instant d'échantillonnage optimal 25 est égal à L×N où L est le nombre de symboles émis correspondant aux sur échantillons et correspond à une fenêtre d'observation égale à L×T_{S} où T_{S} est la durée d'un symbole. Le dispositif de recherche de l'instant d'échantillonnage optimal 25 reçoit les échantillons à N fois la fréquence symbole F_{S} et fournit au dispositif de sous-échantillonnage des informations sur la position de l'échantillon optimal Sₒₚ.

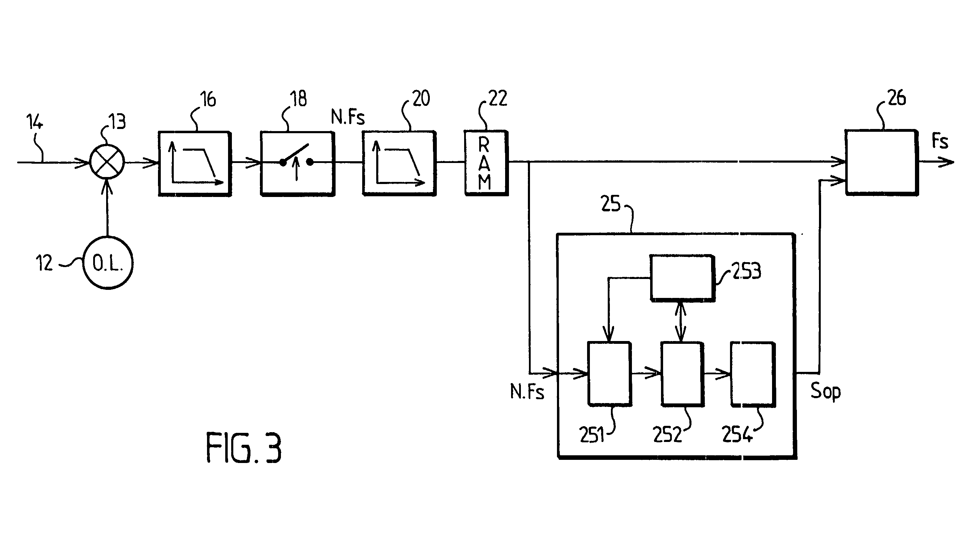

Un mode de réalisation préférentiel d'un récepteur selon la figure 2 est représenté à titre d'exemple sur la figure 3. Selon ce mode de réalisation, le dispositif de recherche de l'instant d'échantillonnage optimal 25 comporte, par exemple dans un processeur de signal numérique DSP :
- un dispositif de prélèvement 251 pour prélever des échantillons parmi les échantillons d'entrée stockés dans la mémoire 22 et en particulier pour prélever L×M d'échantillons prédéterminés (M étant indépendant de N) parmi les L×N échantillons d'entrée stockés dans la mémoire 22 pour les fournir à un organe de calcul 252,
- un organe de calcul d'amplitude 252 pour calculer les amplitudes moyennes des échantillons prélevés en déterminer le maximum et en déduire une approximation de l'échantillon optimal, ou maximum approché, cette approximation est notée Sⱼ,
- un sélectionneur 253 coopérant avec le dispositif de prélèvement 251 pour sélectionner et pour prélever des échantillons d'entrée compris entre la dernière approximation et l'échantillon voisin dont l'amplitude moyenne précédemment calculée est la plus grande en vue de calculer leur amplitude moyenne et
- un comparateur 254 pour comparer l'amplitude moyenne de chaque échantillon sélectionné au maximum des amplitudes moyennes précédemment calculé correspondant à l'approximation précédente et pour en déduire une nouvelle approximation de l'échantillon optimal.

Chacun des organes 251 à 254 peut être réalisé à partir de composants matériels différents ou bien à l'aide de circuits programmés de façon appropriée ou encore à l'aide de moyens logiciels.

Le calcul d'amplitude est ainsi itéré pour des échantillons sélectionnés en fonction de leur position par rapport à la dernière approximation obtenue. Ils sont compris entre la première approximation obtenue à partir des L×M échantillons prédéterminés et l'échantillon voisin dont l'amplitude moyenne qui a déjà été calculée est la plus grande. Pour la première série de calculs, l'échantillon voisin est l'un des M échantillons prédéterminés. Pour chaque itération suivante, il est issu de tous les échantillons dont l'amplitude moyenne a déjà été calculée,

L'échantillon optimal est ainsi retrouvé par approximations successives sans avoir à calculer les amplitudes de tous tes échantillons stockés. Cela est possible car la fonction représentant les amplitudes moyennes de tous les échantillons n'a qu'un seul maximum global et n'a pas de maximum local. L'invention préconise donc d'effectuer d'abord une première série de calculs pour L×M points ou échantillons (avec 2<M<N) prédéterminés parmi les L×N échantillons stockés. De préférence M et N sont des puissances de 2 : N=2ⁿ, M=2^{m} avec 2<M<N et les L×M échantillons sont uniformément répartis sur la durée de calcul L×T_{S} de manière qu'il existe toujours un échantillon parmi les échantillons stockés, situé à mi-distance entre deux échantillons parmi les L×M échantillons prédéterminé.

Le résultat est indépendant de la méthode utilisée par l'organe de calcul 252 pour le calcul de l'amplitude moyenne. On pourra utiliser par exemple la méthode des puissances au carré qui consiste pour chaque échantillon, à calculer la somme des puissances au carré de tous les échantillons compris dans une fenêtre de calcul et ayant une même position dans le paquet reçu c'est-à-dire espacés de la durée du symbole émis notée T_{S}, ou bien la méthode dite du diagramme de l'oeil, dans laquelle au lieu de calculer la somme des puissances au carré, on calcule la somme des valeurs absolues. L'échantillon d'indice j et noté Sⱼ ayant l'amplitude moyenne la plus grande est alors mémorisé. Il constitue une approximation de l'échantillon optimal recherché Sₒₚ. Chaque itération successive fournit une nouvelle approximation de l'échantillon optimal qui peut être égale à l'approximation précédente. En effet, l'organe de calcul 252 effectue un calcul d'amplitude supplémentaire pour un échantillon supplémentaire sélectionné parmi les N échantillons stockés, compris entre la dernière approximation calculée et celui des deux échantillons voisins d'indice j-i et j+i et notés Sⱼ₋ᵢ et Sⱼ₊ᵢ pour lesquels l'amplitude moyenne qui a déjà été calculée lors d'une itération précédente a la plus forte amplitude. De préférence, l'échantillon supplémentaire calculé est celui situé au milieu entre l'approximation courante et l'échantillon voisin pour lequel l'amplitude moyenne a la plus forte amplitude. Le comparateur 254 compare ensuite le nouveau résultat obtenu pour l'échantillon supplémentaire sélectionné parmi les N échantillons stockés à l'approximation courante pour en déduire une nouvelle approximation de l'échantillon optimal égale au maximum entre l'approximation courante et ce nouveau résultat. A chaque nouvelle itération, la précision du résultat est augmentée d'un facteur 2. L'échantillon optimal est retrouvé par approximation successives au bout d'un nombre d'itérations prédéterminé égal à n-m ce qui revient à effectuer M+n-m calculs. Le calcul des M premiers échantillons prédéterminés n'est pas compté comme une itération.

L'invention est particulièrement avantageuse pour un facteur de sur-échantillonnage égal ou supérieur à 8 soit en utilisant un nombre M d'échantillons prédéterminés au moins égal à 4. En effet, pour M=2, 2 échantillons S₁ et S₂ sont présélectionnés et il est impossible de décider si le maximum d'amplitude se situe entre S₁ et S₂ ou entre S₂ et S₁. A titre d'exemple, en considérant un facteur de sur-échantillonnage égal à 16, soit N=16=2⁴ et n=4, la mémoire 22 contient alors 16 échantillons, notés S₀ à S₁₅, susceptibles de représenter l'échantillon optimal, l'indice représentant la position ou l'instant de l'échantillon par rapport à l'horloge locale du récepteur. L'invention préconise d'effectuer une première série de calculs d'amplitude pour les 4 échantillons S₀, S₄, S₈ et S₁₂, soit M=4=2² et m=2. Au bout de M+n-m=2 itérations, l'échantillon optimal est retrouvé, soit au total au bout de 6 calculs d'amplitude moyenne. Le nombre de calculs est proportionnel au logarithme en base 2 du facteur d'échantillonnage N.

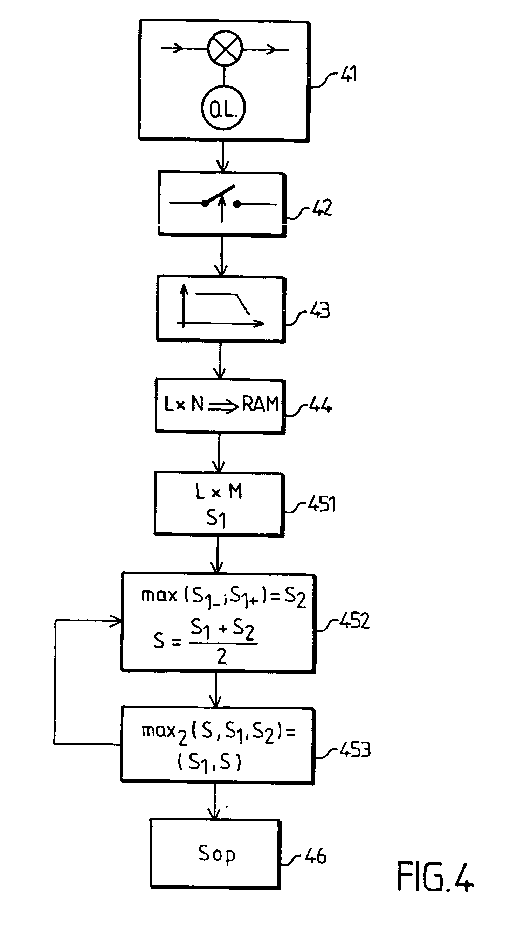

La figure 4 représente les différentes étapes d'un procédé de recherche de l'instant d'échantillonnage optimal à la réception selon l'invention. Ce procédé comporte dans l'ordre les étapes suivantes:
- étape 40 : réception du signal contenant les paquets de données,
- étape 41 : conversion du signal reçu en bande de base,
- étape 42 : sur-échantillonnage du signal en bande de base pour obtenir N échantillons,
- étape 43 : filtrage passe-bas à l'aide d'un filtre en racine de Nyquist adapté au filtre utilisé à l'émission,
- étape 44 : stockage des L×N (N=2ⁿ) échantillons.
- étape 45 : recherche de l'échantillon optimal noté Sₒₚ,
- étape 46 : sous-échantillonnage en ne sélectionnant parmi les échantillons disponibles en mémoire que l'échantillon optimal Sₒₚ.

L'étape 45 comprend les sous-étapes suivantes :
- étape 451 : calcul de l'amplitude moyenne sur L×M échantillons stockés prédéterminés avec M=2^{m} correspondant aux échantillons d'indice kxN/M pour 0≤k<M≤N et sélection de l'échantillon noté S₁ d'indice k₁×N/M ayant l'amplitude moyenne la plus grande.
- étape 452 : détermination du maximum d'amplitude entre les échantillons voisins de l'échantillon S₁ notés S₁₋ et S₁₊ dont les amplitudes moyennes ont déjà été calculées, c'est-à-dire entre l'échantillon d'indice (k₁-1)×N/M et l'échantillon d'indice (k₁+1)×N/M. L'échantillon ayant l'amplitude moyenne maximum entre S₁₋ et S₁₊ est noté S₂ et son indice est noté k₂. Si S₁=0, l'échantillon d'indice (k₁-1)×N/M est l'échantillon d'indice (M-1)N/M et si S1=(M-1)×N/M l'échantillon d'indice (k₁+1)×N/M est l'échantillon 0. Ensuite on calcule l'amplitude moyenne de l'échantillon S d'indice (K₁+k₂)N/2M.
- étape 453 : comparaison des amplitudes moyennes des échantillons S, S₁ et S₂ pour conserver les deux échantillons ayant la plus forte amplitude pour la suite des opérations. A ce state des itérations, les deux échantillons à conserver sont S et S₁ car la fonction d'amplitude des échantillons n'a qu'un seul maximum, les deux plus grands sont donc forcément deux échantillons consécutifs. On revient ensuite à l'étape 452 pour calculer l'amplitude de l'échantillon S' situé au milieu des deux derniers échantillons sélectionnés et ainsi de suite jusqu'à ce que tes deux derniers échantillons soient des échantillons adjacents parmi tous les échantillons stockés, c'est-à-dire lorsque le nombre d'itérations supplémentaires du calcul d'amplitude, sans compter la première série de calculs réalisée à l'étape 451, est égal à n-m, ou encore au bout d'un nombre total de calculs égal à M+n-m. A la fin, on ne conserve que l'échantillon Sₒₚ dit échantillon optimal ayant la plus grande amplitude moyenne.

## Revendications

1. Dispositif de recherche d'instant d'échantillonnage optimal d'un signal échantillonné, destiné à retrouver un échantillon, dit échantillon optimal, parmi un nombre d'échantillons d'entrée égal à un multiple entier L d'un entier N, avec N=2ⁿ, N étant un entier, et comportant un organe de calcul d'amplitude (252) pour calculer les amplitudes moyennes d'échantillons d'entrée, **caractérisé en ce qu'**il comprend en outre :
- un dispositif de prélèvement (251) pour prélever un nombre d'échantillons d'entrée prédéterminé, parmi les N échantillons d'entrée, égal à un entier L×M, avec M=2^{m}, m étant un entier et 2<M<N, pour les fournir audit organe de calcul (252) en vue de déterminer celui qui a l'amplitude moyenne maximum, dit maximum approché,
- un sélectionneur (253) pour sélectionner un échantillon d'entrée supplémentaire compris entre le maximum approché et l'échantillon voisin dont l'amplitude moyenne précédemment calculée est la plus grande et pour le fournir à l'organe de calcul (252) en vue de calculer son amplitude moyenne, et
- un comparateur (254) pour comparer l'amplitude moyenne de l'échantillon sélectionné au maximum approché précédent et pour en déduire un nouveau maximum approché,
et **en ce que** ledit échantillon optimal est obtenu au bout d'un nombre de calculs d'amplitude moyenne égal à M+n-m.

2. Dispositif selon la revendication 1, **caractérisé en ce que** ledit échantillon d'entrée supplémentaire est situé au milieu entre le dernier maximum approché et l'échantillon voisin dont l'amplitude moyenne précédemment calculée est la plus grande.

3. Dispositif selon l'une des revendications 1 et 2, **caractérisé en ce que** lesdits échantillons d'entrée représentent un symbole émis ayant une durée symbole.

4. Dispositif selon la revendication 3, **caractérisé en ce que** lesdits échantillons prélevés, en nombre prédéterminé, sont répartis dans un intervalle de temps correspondant à ladite durée symbole.

5. Récepteur (10) pour un système de transmission par paquets, destiné à recevoir des paquets de données représentant des symboles émis par un terminal (2) ou une station de tête (1) dudit système et comportant un dispositif de sur-échantillonnage (18) pour générer une pluralité d'échantillons d'entrée à partir des données reçues, **caractérisé en ce qu'**il comporte un dispositif de recherche d'instant d'échantillonnage optimal selon l'une des revendications 1 à 4.

6. Système de transmission par paquets comprenant au moins un terminal (2) et une station de tête (1), **caractérisé en ce que** ladite station de tête (1) et/ou ledit terminal (2) comporte(nt) un récepteur (10) selon la revendication 5.

7. Procédé de récupération d'instant d'échantillonnage optimal d'un signal échantillonné, destiné à retrouver un échantillon, dit échantillon optimal, parmi un nombre d'échantillons d'entrée égal à un multiple entier L d'un entier N, avec N=2ⁿ, N étant un entier, ledit procédé comportant une étape de calcul d'amplitude pour déterminer le maximum des amplitudes moyennes d'échantillons d'entrée et pour en déduire un échantillon optimal, **caractérisé en ce qu'**il comporte en outre les étapes suivantes:
- prélever un nombre d'échantillons d'entrée prédéterminé, parmi les N échantillons d'entrée, égal à un entier L×M, avec M=2^{m}, m étant un entier et 2<M<N,
- déterminer les amplitudes moyennes desdits échantillons prélevés de manière à déduire une approximation de l'échantillon optimal ayant l'amplitude moyenne maximum, dite maximum approché,
- itérer la détermination d'amplitudes moyennes pour des échantillons d'entrée compris entre ladite approximation de l'échantillon optimal et l'échantillon voisin dont l'amplitude moyenne précédemment calculée est la plus grande et,
- comparer le résultat de chaque itération au maximum approché précédemment calculé, correspondant à l'approximation précédente, pour en déduire une nouvelle approximation de l'échantillon optimal,
ledit échantillon optimal étant obtenu au bout d'un nombre de calculs d'amplitude moyenne égal à M+n-m.

## Claims

1. A device for searching the optimal sampling instant of a sampled signal intended to retrieve a sample, referred to as optimal sample, from a number of input samples which is equal to an integral multiple L of an integer N, with N=2ⁿ, wherein N is an integer, and comprising an amplitude-computing member (252) for computing the average amplitudes of the input samples, **characterized in that** it also comprises:
- a device (251) for taking a number of predetermined input samples from the N input samples, equal to an integer LxM, with M=2^{m}, wherein m is an integer and 2<M<N, to be supplied to said computing member (252) with a view to determining the sample having the maximum average amplitude, referred to as approximated maximum,
- a selector (253) for selecting a supplementary input sample comprised between the approximated maximum and the neighboring sample whose previously computed average amplitude is the largest and for supplying said sample to the computing member (252) with a view to computing its average amplitude, and
- a comparator (254) for comparing the average amplitude of the selected sample with the previous approximated maximum and for deriving a new approximated maximum, and **in that** said optimal sample is obtained at the end of a number of average amplitude computations which is equal to M+n-m.A

2. A device as claimed in claim 1, **characterized in that** said supplementary input sample is situated midway between the last approximated maximum and the neighboring sample whose previously computed average amplitude is the largest.

3. A device as claimed in claim 1 or 2, **characterized in that** said input samples represent a transmitted symbol having a symbol duration.

4. A device as claimed in claim 3, **characterized in that** said samples taken in the predetermined number are distributed in a time interval corresponding to said symbol duration.

5. A receiver (10) for a packet transmission system intended to receive data packets representing symbols transmitted by a terminal (2) or a head station (1) of said system, and comprising a sub-sampling device (18) for generating a plurality of input samples from the received data, **characterized in that** it comprises a device for searching the optimal sampling instant as claimed in any one of claims 1 to 4.

6. A packet transmission system comprising at least one terminal (2) and a head station (1), **characterized in that** said head station (1) and/or said terminal (2) comprise or comprises a receiver (10) as claimed in claim 5.

7. A method of recovering the optimal sampling instant of a sampled signal, intended to retrieve a sample, referred to as optimal sample, from a number of input samples, which is equal to an integral multiple L of an integer N, with N=2ⁿ, wherein N is an integer, said method comprising a step of computing the amplitude for determining the maximum of the average amplitudes of the input samples and for deriving an optimal sample, **characterized in that** it also comprises the following steps:
- taking a predetermined number of input samples from the N input samples, equal to an integer LxM, with M=2^{m}, wherein m is an integer and 2<M<N,
- determining the average amplitudes of said samples taken so as to derive an approximation of the optimal sample having the maximum average amplitude, referred to as approximated maximum,
- iterating the average amplitude determination for input samples comprised between said approximation of the optimal sample and the neighboring sample whose previously computed average amplitude is the largest, and
- comparing the result of each iteration with the previously computed approximated maximum corresponding to the previous approximation for deriving a new approximation of the optimal sample,
said optimal sample being obtained at the end of a number of average amplitude computations which is equal to M+n-m.

## Patentansprüche

1. Vorrichtung zur Suche des optimalen Abtastzeitpunktes eines abgetasteten Signals, dafür bestimmt, einen Abtastwert zu finden, den sogenannten optimalen Abtastwert, unter einer Anzahl von Eingangsabtastwerten gleich einer vielfachen Ganzzahl L einer Ganzzahl N, mit N=2ⁿ, wobei N eine Ganzzahl ist, und mit einer Amplitudenrechenschaltung (252) für die Berechnung der durchschnittlichen Amplituden der Eingangsabtastwerte,
**dadurch gekennzeichnet, dass** sie außerdem enthält:
- eine Entnahmevorrichtung (251) für die Entnahme einer Anzahl von Eingangsabtastwerten unter den N Eingangsabtastwerten gleich einer Ganzzahl LxM, mit M=2^{m}, wobei m eine Ganzzahl ist und 2<M<N, um sie der besagten Rechenschaltung (252) zuzuführen und denjenigen zu bestimmen, der die durchschnittlich höchste, die sogenannte meist genäherte Amplitude hat,
- einen Auswähler (253) für die Auswahl eines zusätzlichen Eingangsabtastwerts, enthalten zwischen dem meist genäherten und dem benachbarten Abtastwert, dessen zuvor berechnete durchschnittliche Amplitude die größte ist, und für die Weiterleitung in die Rechenschaltung (252) für die Berechnung seiner durchschnittlichen Amplitude, und
- einen Vergleicher (254) für den Vergleich der durchschnittlichen Amplitude des ausgewählten Abtastwerts mit dem zuvor meist genäherten, um davon einen neuen meist genäherten abzuleiten,
und dadurch, dass der besagte optimale Abtastwert nach einer Anzahl von Berechnungen der durchschnittlichen Amplitude gleich M+n-m erhalten wird.

2. Vorrichtung nach Anspruch 1, **dadurch gekennzeichnet, dass** der besagte Eingangsabtastwert zusätzlich in der Mitte gelegen ist, zwischen dem letzten meist genäherten und dem benachbarten Abtastwert, von dem die zuvor berechnete durchschnittliche Amplitude die größte ist.

3. Vorrichtung nach einem der Ansprüche 1 und 2, **dadurch gekennzeichnet, dass** die besagten Eingangsabtastwerte ein gesendetes Symbol mit eine Symboldauer darstellen.

4. Vorrichtung nach Anspruch 3, **dadurch gekennzeichnet, dass** die besagten in vorbestimmter Anzahl entnommenen Abtastwerte in einem Zeitintervall verteilt werden, das der besagten Symboldauer entspricht.

5. Empfänger (10) für ein Datenpaket-Übertragungssystem, dafür bestimmt, Symbole darstellende Datenpakete zu empfangen, gesendet von einem Terminal (2) oder einer Kopfstation (1) des besagten Systems, und ausgerüstet ist mit einer Vorrichtung zur Überabtastung (18) für die Erzeugung einer Vielzahl von Eingangsabtastwerten anhand der erhaltenen Daten, **dadurch gekennzeichnet, dass** er eine Vorrichtung zur Suche des optimalen Abtastzeitpunktes nach einem der Ansprüche 1 bis 4 enthält.

6. Datenpaket-Übertragungssystem mit mindestens ein Terminal (2) und einer Kopfstation (1), **dadurch gekennzeichnet, dass** die besagte Kopfstation (1) und/oder das besagte Terminal (2) einen Empfänger (10) nach Anspruch 5 enthält.

7. Verfahren zum Abrufen des optimalen Abtastzeitpunktes eines abgetasteten Signals, dafür bestimmt, einen Abtastwert zu finden, den sogenannten optimalen Abtastwert, unter einer Anzahl von Eingangsabtastwerten gleich einer vielfachen Ganzzahl L einer Ganzzahl N, mit N=2ⁿ, wobei N eine Ganzzahl ist, und das besagte Verfahren einen Schritt zur Berechnung der Amplitude enthält, um die höchste der durchschnittlichen Amplituden der Eingangsabtastwerte zu bestimmen und um davon einen optimalen Abtastwert abzuleiten, **dadurch gekennzeichnet, dass** es außerdem folgende Schritte enthält:
- Entnahme einer Anzahl von vorbestimmten Eingangsabtastwerten unter den N Eingangsabtastwerten gleich einer Ganzzahl LxM, mit M=2^{m}, wobei m eine Ganzzahl ist und 2<M<N,
- Bestimmen der durchschnittlichen Amplituden der besagten entnommenen Abtastwerte, um eine Annäherung an den optimalen Abtastwert mit der durchschnittlich höchsten Amplitude, der sogenannten meist genäherten, abzuleiten,
- Wiederholen der Bestimmung der durchschnittlichen Amplituden der Eingangsabtastwerte, enthalten zwischen der besagten Annäherung des optimalen Abtastwerts und dem benachbarten Abtastwert, von dem die zuvor berechnete durchschnittliche Amplitude die größte ist, und
- Vergleichen der Ergebnisse jeder Wiederholung mit dem zuvor berechneten meist genäherten, das der vorhergehenden Annäherung entspricht, um davon eine neue Annäherung des optimalen Abtastwerts abzuleiten,
wobei der besagte optimale Abtastwert nach einer Anzahl von Berechnungen der durchschnittlichen Amplitude gleich M+n-m erhalten wird.
